# EUROPÄISCHE PATENTSCHRIFT

(11) **EP 4 021 680 B1**
(45) Veröffentlichungstag und Bekanntmachung des Hinweises auf die Patenterteilung: **17.07.2024**
(21) Anmeldenummer: 20763980.8
(22) Anmeldetag: 13.08.2020
(51) Int. Cl.: B23Q 3/06, B25B 5/00, B23H 11/00, B23H 3/00, B23H 9/10

(54) **ECM-ANLAGE MIT EINER AUFNAHME UND EINER BEARBEITUNGSPLATTFORM**
ECM SYSTEM, HAVING A HOLDER AND A MACHINING PLATFORM
SYSTÈME ECM COMPRENANT UN SUPPORT ET UNE PLATEFORME D'USINAGE

(30) Priorität: 29.08.2019 DE 102019213013
(43) Veröffentlichungstag der Anmeldung: 06.07.2022
(73) Patentinhaber: MTU Aero Engines AG, 80995 München (DE)
(72) Erfinder: HUTTNER, Roland, 80995 München (DE); ZEIS, Markus, 80995 München (DE); DOLL, Christian, 80995 München (DE); KNEILLING, Rolf, 80995 München (DE)
(86) Internationale Anmeldenummer: PCT/DE2020/000188
(87) Internationale Veröffentlichungsnummer: WO 2021/037294

(56) Entgegenhaltungen:
- CN-A- 104 607 732
- DE-A1- 102015 102 720
- US-A1- 2016 074 952

## Beschreibung

Die Erfindung betrifft eine ECM-Anlage mit einer Aufnahme und einer Spanneinrichtung für wenigstens ein zu bearbeitendes Bauteil und mit einer Bearbeitungsplattform zum elektrochemischen Bearbeiten des wenigstens einen Bauteils an wenigstens einer Bearbeitungsposition.

Aus den Dokumenten US 2016/074952 A1 und DE 10 2015 102720 A1 sind ECM-Anlagen bekannt, die keine räumlich einrichtbare Positioniereinrichtung aufweisen.

EMC-Anlagen dienen zum elektrochemischen Bearbeiten (Elysieren) von aus elektrisch leitfähigen Werkstoffen hergestellten Bauteilen. Bei einem Verfahren zum elektrochemischen Bearbeiten eines Bauteils, wie dem Elektrochemischen Abtragen (ECM: "Electrochemical Machining"), dem Präzisen Elektrochemischen Abtragen (PEM: "Precise Electrochemical Machining") oder dem Gepulsten Elektrochemischen Abtragen (PECM: "Pulsed Electrochemical Machining"), wird ein elektrisch leitfähiges Metall durch einen elektrochemischen Prozess entfernt. Dabei wird eine Kathode (Elektrode, Werkzeug) gegenüber einer Anode (Bauteil) verschoben und dabei "in" bzw. "durch" das Bauteil geführt. Gleichzeitig wird ein Elektrolyt in den zwischen der Katode und der Anode verbleibenden Spalt geleitet, welcher insbesondere auch zum Abtransport der entstehenden Prozessprodukte dient. Die Vorschubgeschwindigkeit, die abhängig von der eingesetzten Verfahrensart zwischen 0,05 mm/min und 10 mm/min beträgt, ist gleich der Geschwindigkeit, mit welcher den Spalt durchwandernde Elektronen Werkstoff aus dem Bauteil lösen. Im Bauteil wird dabei die gewünschte, durch die Elektrode vorgegebene Form ausgebildet.

Um eine präzise Bearbeitung eines Bauteils zu ermöglichen, ist eine präzise Positionierung des zu bearbeitenden Bauteils in der EMC-Anlage und insbesondere auch gegenüber der Elektrode, also dem Werkzeug erforderlich. Dies stellt insbesondere bei solchen Bauteilen eine Herausforderung dar, welche eine Mehrfachbearbeitung in unterschiedlichen Anordnungen, wie beispielsweise bezüglich der Lage und Positionierung zum Zentrum, oder einem Teilungswinkel erfordern. So erfordert beispielsweise ein Herstellen von am Umfang scheibenförmiger Bauteile ausgebildeter Profilnuten einen hohen maschinenbaulichen Aufwand, der mit der Anzahl der Bearbeitungspositionen linear steigt. Beispielsweise sind zur Bearbeitung einer solchen Struktur vier Freiheitsgrade erforderlich: die radiale Position der Bearbeitung, deren Winkellage, der Senkwinkel und die Anordnung einer Vorschubachse der Elektrode. Eine Festlegung dieser Freiheitsgrade in einer ECM-Anlage ist sehr komplex und kaum erweiterbar. Infolgedessen ist mit den aktuell eingesetzten Mitteln zur Positionierung von Bauteilen und Werkzeugen in einer ECM Anlage nur eine eingeschränkte Anzahl von Bearbeitungspositionen möglich.

Hiervon ausgehend ist es eine Aufgabe der vorliegenden Erfindung, eine ECM-Anlage mit einer verbesserten Anordnung und Positionierung eines Bauteils und/ oder wenigstens eines Werkzeugs bzw. der Bearbeitungsposition vorzuschlagen. Dies wird erfindungsgemäß durch die Lehre des unabhängigen Anspruchs erreicht. Vorteilhafte Ausführungen der Erfindung sind Gegenstand der Unteransprüche.

Zur Lösung der Aufgabe wird eine ECM-Anlage mit einer Aufnahme zum Anordnen wenigstens eines zu bearbeitenden Bauteils und mit wenigstens einer Bearbeitungsstation zum elektrochemischen Bearbeiten des wenigstens einen Bauteils an wenigstens einer Bearbeitungsposition vorgeschlagen. Die ECM-Anlage weist eine räumlich einrichtbare Positioniereinrichtung auf, welche ausgebildet ist, eine nach dem Einrichten der Positioniereinrichtung daran angeordnete Bearbeitungsplattform in einer vorbestimmten Position zu lagern. Die Bearbeitungsplattform weist wenigstens eine Bearbeitungsstation mit wenigstens einer daran angeordneten Elektrode auf, die entlang einer Bearbeitungsbahn zum Bearbeiten des wenigstens einen an der Aufnahme anordenbaren Bauteils verfahrbar ist.

Die Aufnahme der ECM-Anlage ist beispielsweise so ausgeführt, dass damit insbesondere mit einem daran angeordneten Bauteil eine definierte Positionsänderung durchführbar ist, beispielsweise zwischen zwei Bearbeitungsschritten. Insbesondere kann die Aufnahme dabei drehbar oder in wenigstens einem insbesondere vorbestimmten Bereich verschiebbar ausgebildet sein.

An der ECM-Anlage ist eine räumlich einrichtbare Positioniereinrichtung angeordnet. Zum räumlichen Einrichten weist die Positioniereinrichtung eine geeignete Anzahl von Freiheitsgraden auf, in welchen diese ganz oder teilweise räumlich angepasst werden kann. Mit "Einrichten" wird vorliegend allgemein das insbesondere räumliche Positionieren und Fixieren insbesondere "einrichtbar" gestalteter Elemente bezeichnet. So können ein oder mehrere Elemente der beispielsweise ein- oder mehrteilig ausgeführten Positioniereinrichtung insbesondere in einem ausreichenden Grad verschoben, verdreht, geneigt, gekippt bzw. insbesondere in einer Kombination solcher Bewegungen in geeigneter Weise im Raum bewegt und an bzw. in der gewünschten Position fixiert werden. Die Positioniereinrichtung kann beispielsweise ein- oder mehrteilig ausgeführt sein. Beispielsweise kann die Positioniereinrichtung auch wenigstens ein Element aufweisen, welches nur eine begrenzte Zahl von Freiheitsgraden, wie einen oder zwei Freiheitsgrade aufweist, oder neben wenigstens einem beweglichen Element auch wenigstens ein fest angeordnetes Element.

Die Positioniereinrichtung ist ausgebildet, eine nach dem Einrichten dieser daran angeordnete Bearbeitungsplattform in einer vorbestimmten Position zu lagern. Dabei definiert die Positionseinrichtung die räumliche Position der daran angeordneten Bearbeitungsplattform beispielsweise durch an der bzw. den Schnittstellen von Positioniereinrichtung und Bearbeitungsplattform angeordnete form- und/ oder kraftschlüssig wirkende Anlageflächen. Beispielsweise ist die Bearbeitungsplattform form- und/ oder kraftschlüssig auf die Positioniereinrichtung aufsetzbar, so dass ohne zusätzliche Befestigungsmaßnahmen ein schnelles und präzises Anordnen einer Bearbeitungsplattform in einer insbesondere gegenüber der Aufnahme vorbestimmten bzw. definierten Position an der Positioniereinrichtung möglich ist. Dies ermöglicht eine präzise Bearbeitung eines insbesondere positioniert an der Aufnahme angeordneten Bauteils. Die insbesondere form- und/ oder kraftschlüssig wirkenden Anlageflächen der Positioniereinrichtung bzw. von deren Elementen sind dabei gegenüber der ECM-Anlage einrichtbar, d. h. in ihrer räumlichen Position anpassbar ausgeführt. Insbesondere kann die Positioniereinrichtung zum vereinfachten Einrichten ein sogenanntes Nullpunktspannsystem (NPSS) aufweisen, welches zum schnellen und präzisen Festlegen der eingerichteten Position dient.

Die ECM-Anlage weist ferner eine an der Positioniereinrichtung anordenbare und dort lagerbare Bearbeitungsplattform für das elektrochemische Bearbeiten des wenigstens eines Bauteils an wenigstens einer Bearbeitungsposition auf. Die Bearbeitungsplattform ist insbesondere nach dem Einrichten (= Positionieren und Fixieren) der Positioniereinrichtung an dieser anordenbar, um in einer insbesondere durch das Einrichten der Positioniereinrichtung festgelegten vorbestimmten Position an der Positioniereinrichtung gelagert zu werden.

Eine solche Bearbeitungsplattform weist für das elektrochemische Bearbeiten von Bauteilen eine oder mehrere daran angeordnete Bearbeitungsstationen auf, an welchen jeweils wenigstens eine Elektrode anordenbar ist. Dabei können an einer Bearbeitungsstation ein, zwei, drei, vier, fünf, sechs, sieben, acht, neun, zehn, elf, zwölf oder mehr unabhängig voneinander betreibbare Bearbeitungsstationen vorgesehen sein. Es ist aber auch möglich, dass jeweils zwei oder mehr solcher Bearbeitungsstationen synchronisiert oder auf andere Weise voneinander abhängig betreibbar sind. Die wenigstens eine an einer Bearbeitungsstation angeordnete Elektrode ist entlang einer insbesondere vorgegebenen Bearbeitungsbahn zum Bearbeiten des wenigstens einen Bauteils verfahrbar. Hierzu weist eine Bearbeitungsstation eine geeignete Vorschubeinrichtung auf oder ist mit einer solchen wirkverbunden. Insbesondere ermöglicht der Einsatz einer Bearbeitungsplattform mit mehreren daran anordenbaren Bearbeitungsstationen eine parallele Bearbeitung von Bauteilen mit mehreren von Elektroden.

Bei einer Ausführung sind in die Bearbeitungsstation erforderliche Versorgungssysteme integriert, wie beispielsweise eine Elektrolytversorgung, welche den Spalt zwischen der Elektrode und dem bearbeiteten Bauteil mit Elektrolyt versorgt. Insbesondere weist die Bearbeitungsplattform dabei entsprechende Medienanschlüsse zur Versorgung von an der Bearbeitungsplattform angeordneten Einrichtungen insbesondere mit Elektrolyt und Energie auf. Diese können beispielsweise mit Schnellkupplungen und/ oder sogenannten Multiköntaktsteckem versehen sein, um ein Anschließen der Bearbeitungsplattform an die Versorgungssysteme der ECM-Anlage zu vereinfachen. Neben Anschlüssen an Versorgungssysteme für Energie oder Elektrolyt kann beispielsweise auch wenigstens ein Anschluss an ein Druckluft- und/ oder Hydraulikflüssigkeitsversorgungssystem vorgesehen sein.

Die vorgeschlagene ECM-Anlage erlaubt eine verbesserte Anordnung und Positionierung eines zu bearbeitenden Bauteils und/ oder einer an einer Bearbeitungsplattform angeordneten Bearbeitungsstation zur Durchführung einer elektrochemischen Bearbeitung. Insbesondere erlaubt die ECM-Anlage durch die Positionierung der Bearbeitungsplattform mittels einer einrichtbaren Positioniereinrichtung sowie der Aufnahme ein schnelles und präzises Rüsten der ECM-Anlage. Zur Verbesserung bzw. Gewährleistung der Genauigkeit der Bearbeitung kann die Bearbeitungsplattform beispielsweise an einer eine Positionierung oder einer geeignet ausgebildeten'Aufnahme aufweisenden Messmaschine eingestellt, nachgemessen und/ oder gewartet werden.

Eine Ausführungsform der ECM-Anlage weist eine Aufnahme auf, deren räumliche Position gegenüber der Positioniereinrichtung einstellbar ist. Dazu kann die Aufnahme beispielsweise in einem geeigneten Grad verschoben, verdreht, geneigt, gekippt bzw. insbesondere in einer Kombination solcher Bewegungen in geeigneter Weise im Raum bewegt und an bzw. in der gewünschten Position fixiert werden. Die Position der Aufnahme ist dabei insbesondere mithilfe einer Einstelleinrichtung unmittelbar gegenüber der insbesondere eingerichteten, Positioniereinrichtung fest- bzw. einstellbar. Dies vereinfacht eine präzise Bearbeitung eines insbesondere positioniert an der Aufnahme angeordneten Bauteils. Insbesondere kann die Aufnahme zum vereinfachten Fixieren in der eingestellten Position ein sogenanntes Nullpunktspannsystem (NPSS) aufweisen.

Bei einer Ausführungsform der ECM-Anlage sind mehrere Bearbeitungsplattformen wechselweise an der Positioniereinrichtung anordenbar. Das einfache Anordnen und Positionieren einer Bearbeitungsplattform über die Positioniereinrichtung an der ECM-Anlage erlaubt ein schnelles und einfaches Umrüsten der ECM-Anlage für verschiedene Bearbeitungsvorgänge oder beispielsweise bei Störungen einer Bearbeitungsstation oder -plattform.

Eine Ausführungsform der ECM-Anlage weist eine Spanneinrichtung für wenigstens ein zu bearbeitendes Bauteil auf, an welcher das wenigstens eine Bauteil in einer vordefinierten Position anordenbar ist und welche zusammen mit dem wenigstens einen Bauteil in einer vordefinierten Position an der Aufnahme anordenbar ist. Neben einem überwiegend kraftschlüssigem Anordnen eines Bauteils an der Spanneinrichtung ("Spannen") kann diese auch so ausgeführt sein, dass ein Bauteil daran überwiegend oder ganz formschlüssig anordenbar ist.

Das wenigstens eine Bauteil ist in einer vordefinierten Position an der Spanneinrichtung anordenbar. Dabei ist das wenigstens eine Bauteil in einer vorgegebenen Position beispielsweise form- und/ oder kraftschlüssig an der Spanneinrichtung anorden- bzw. aufnehmbar, wobei das Bauteil und die Spanneinrichtung fest miteinander verbindbar ausgeführt sein können. Eine vordefinierte Position des wenigstens einen Bauteils an der Spanneinrichtung ermöglicht eine einfache Aufnahme des wenigstens einen Bauteils in einer vorbestimmten Position an der Aufnahme, sobald dieses zusammen mit der Spanneinrichtung insbesondere form- und/ oder kraftschlüssig an der Aufnahme angeordnet ist. Zusätzlich kann wenigstens ein in einer vorgesehenen Position an einer Spanneinrichtung angeordnetes Bauteils gemeinsam mit dieser einfach und schnell gegen wenigstens ein weiteres in einer vorgesehenen Position an einer Spanneinrichtung angeordnetes Bauteil ausgetauscht werden, insbesondere ohne dass ein erneutes Einrichten der Aufnahme gegenüber der Positioniereinrichtung und/ oder gegenüber der Bearbeitungsplattform erforderlich ist.

Dadurch, dass die Spanneinrichtung zusammen mit dem wenigstens einen Bauteil in einer vordefinierten Position an der Aufnahme anordenbar ist, gegenüber der die Positioniereinrichtung ausgerichtet ist, ist damit auch die Spanneinrichtung zusammen mit dem wenigstens einen Bauteil in einer vordefinierten Position gegenüber der eingerichteten Positioniereinrichtung bzw. gegenüber der an der eingerichteten Positioniereinrichtung angeordneten Bearbeitungsplattform angeordnet. Die vordefinierte Position zwischen der Aufnahme und der Spanneinrichtung bzw. dem wenigstens einen Bauteil kann dabei beispielsweise über eine form- und/ oder kraftschlüssige Verbindung vorgesehen werden.

Bei einer Ausführungsform der ECM-Anlage ist an der wenigstens einen Bearbeitungsstation ein positionierbarer Elektrodenträger angeordnet, an welchem wenigstens eine Elektrode in einer vorbestimmten Position anordenbar ist. Insbesondere ist ein solcher Elektrodenträger gegenüber der eingerichteten Positioniereinrichtung oder gegenüber der Aufnahme einstellbar, beispielsweise mithilfe einer für diesen Zweck vorgesehenen Einstelleinrichtung. Insbesondere kann auch vorgesehen sein, dass der positionierbare Elektrodenträger mithilfe bzw. mittelbar durch wenigstens eine an diesem anordenbaren Elektrode einrichtbar ist. Insbesondere kann der Elektrodenträger zum vereinfachten Einrichten bzw. Einstellen ein Nullpunktspannsystem (NPSS) aufweisen, welches ein schnelles und präzises Festlegen der eingerichteten Position unterstützt.

Bei einer Ausführungsform der ECM-Anlage ist die Aufnahme definiert um eine Rotationsachse und/ oder entlang wenigstens einer Bewegungsbahn bewegbar, um wenigstens ein daran angeordnetes Bauteil insbesondere in eine Bearbeitungsposition zu bewegen. Beispielsweise können so mehrere gleiche Bearbeitungsschritte an einer Bearbeitungsstation an verschiedenen Positionen eines Bauteils durchgeführt werden. Hierfür kann ein Bauteil nach einem ersten Bearbeitungsschritt definiert in eine andere Position bewegt werden, um an der sich nun an der Bearbeitungsstation befindenden Bauteilposition den Bearbeitungsschritt zu wiederholen. Dies ist insbesondere vorteilhaft bei in bestimmten Abständen bzw. Winkellagen aufeinanderfolgenden Bearbeitungsschritten, da die vorgeschlagene Gestaltung eine präzise Bewegung wenigstens eines exakt positionierten Bauteils ermöglicht. Zusätzlich kann so auch wenigstens ein an der Aufnahme angeordnetes Bauteil von einer Bearbeitungsstation an wenigstens eine andere Bearbeitungsstation bewegt werden. Die vorgeschlagene Ausführung ermöglicht so eine hohe Genauigkeit der Positionierung mehrerer Bearbeitungsschritte an wenigstens einem Bauteil.

Bei einer Ausführungsform der ECM-Anlage sind an der Bearbeitungsplattform mehrere insbesondere unabhängig voneinander parallel betreibbare Bearbeitungsstationen angeordnet. Auf diese Weise ist ein zeitlich paralleles oder sich überschneidendes und örtlich voneinander beabstandetes Bearbeiten eines Bauteils an mehreren am Bauteil angeordneten Positionen durchführbar. Ein gleichzeitiges Bearbeiten von wenigstens einem Bauteil an mehreren Bearbeitungsstationen ermöglicht einerseits eine Reduzierung der Fertigungsdauer und zudem aufgrund einer geringeren Anzahl von Änderungen der Position des Bauteils eine höhere Genauigkeit der durchgeführten Bearbeitung. Zudem besteht die Möglichkeit, parallel verschiede Features oder Bearbeitungsschritte am Bauteil herzustellen. Ferner kann durch eine höhere Anzahl von eingesetzten Bearbeitungsstationen die Wirtschaftlichkeit einer ECM-Anlage verbessert werden. Im Unterschied zur Verwendung von Komplettwerkzeugen sind bei der Verwendung einer Bearbeitungsplattform mit insbesondere mehreren Bearbeitungsstationen einzelne Elektroden parallel einsetzbar. Ein Einsatz mehrerer Elektroden mit geringerem Bearbeitungsumfang ermöglicht geringere Werkzeugkosten bei höherer Qualität der Werkzeuge, wodurch eine höhere Bearbeitungsqualität erreichbar ist.

Bei einer Ausführungsform der ECM-Anlage weist die wenigstens eine an der Bearbeitungsplattform angeordnete Bearbeitungsstation eine Antriebseinrichtung zum Antreiben der Elektrode bzw. des Elektrodenträgers auf einer fest vorgegebenen Bewegungsbahn auf.

Entsprechend ist die Antriebseinrichtung der Elektrode in die Bearbeitungsplattform integriert ausgeführt, so dass mit einem Wechsel der Bearbeitungsplattform auch die komplette Bearbeitungsstation einschließlich der Antriebseinrichtung und insbesondere einschließlich erforderlicher Versorgungseinrichtungen auswechselbar ist. So kann an einer Bearbeitungsposition eine automatisierte Vorschubachse für die Bearbeitung eingesetzt werden, durch deren Anordnung an der Bearbeitungsplattform beispielsweise der Senkwinkel, die Winkellage und die Position der Bearbeitung vorgegeben ist. Zusätzlich können zum Herstellen komplexerer Gestaltungen selbstverständlich auch Bearbeitungsbahnen mit weiteren Achsen vorgesehen sein. So ist beispielsweise eine Bearbeitung unter einem Winkel schräg und/ oder parallel zu einer Bauteilachse möglich und mit einer aktiven Drehachse sind auch spiralförmige Bearbeitungen ausführbar.

Bei einer Ausführungsform der ECM-Anlage ist ein zu bearbeitendes Bauteil insbesondere rotationssymmetrisch ausgebildet und für eine Bearbeitung am Umfang des Bauteils vorgesehen. Die Bearbeitungsbahn entspricht dabei insbesondere einer Geraden, welche geneigt zur Rotationsachse des Bauteils angeordnet ist. Für eine solche Bearbeitung wird ein entsprechendes Bauteil beispielsweise an einer um eine Rotationsachse drehbar ausgebildeten Aufnahme angeordnet, insbesondere so, dass die Rotationsachse des Bauteils koaxial zur der Rotationsachse der Aufnahme ausgerichtet ist. Bei einer beispielhaften Bearbeitung entspricht die Bearbeitungsbahn einer Bearbeitungsstation einer Geraden, welche insbesondere auch geneigt zur Rotationsachse des Bauteils angeordnet sein kann. Bei dieser Anordnung kann das Bauteil entsprechend einer vorgesehenen Teilung jeweils zwischen zwei Bearbeitungsschritten um einen vorbestimmten Winkel gedreht werden, um die Bearbeitung an einer um den vorbestimmten Winkel gedrehten Lage am Bauteil erneut durchzuführen. Bei dieser Anordnung ist die Ausgangsstellung des Bauteils vorteilhaft unterhalb der Bearbeitungsstelle angeordnet, wodurch zusätzlich erforderliche Achsen vermeidbar sind. Insbesondere sind für eine Bearbeitung über den gesamten Umfang des Bauteils mehrere für die gleichen Bearbeitungsschritte vorgesehene Bearbeitungsstationen an der Bauteilplattform angeordnet, so dass das Bauteil nur einen der Zahl der Bearbeitungsstationen entsprechenden Teil einer Umdrehung zu drehen ist, wie beispielsweise bei vier Bearbeitungsstationen um eine Viertelumdrehung.

Bei einer Ausführungsform weist die ECM-Anlage eine Einstellvorrichtung auf, mit einer an der Positioniereinrichtung anordenbaren ersten Einstelleinrichtung zum Einrichten der Position der Positioniereinrichtung. Und bei einer weiteren Ausführungsform, bei welcher die räumliche Position der Aufnahme gegenüber der Positioniereinrichtung einstellbar ist, weist die ECM-Anlage eine an der ersten Einstelleinrichtung anordenbare zweite Einstelleinrichtung zum Einrichten der Position der Aufnahme auf.

Zusätzlich kann die Positioniereinrichtung unabhängig von der räumlichen Einstellbarkeit der Aufnahme auch eine an der Aufnahme anordenbare dritte Einstelleinrichtung aufweisen, die zum Einrichten der Position wenigstens eines Elektrodenträgers vorgesehen ist.

Die Einstellvorrichtung kann dabei ein- oder mehrteilig ausgeführt sein. Eine Einstelleinrichtung ist beispielsweise in Form einer insbesondere Einricht- bzw. Anlageflächen aufweisenden Lehre ausgeführt. Das Einrichten der jeweiligen Elemente erfolgt dabei insbesondere über wenigstens einen vorgesehenen Kontakt von ebenfalls für diesen Zweck vorgesehenen Einricht- bzw. Anlageflächen an den einzurichtenden Elementen der ECM-Anlage mit den entsprechenden Einricht- bzw. Anlageflächen an der jeweiligen Einstelleinrichtung. Ist ein Element in eine vorgesehene Position an einer Einstelleinrichtung gebracht, wird es in dieser Position fixiert und ist damit eingerichtet bzw. positioniert. Zusätzlich kann eine Einstelleinrichtung auch Verbindungsflächen aufweisen, an welchen diese an einer fest an der ECM-Anlage angeordneten Einrichtung oder an einer anderen Einstelleinrichtung anordenbar und/ oder mit dieser verbindbar ist, oder an welchen wenigstens eine andere Einstelleinrichtung anordenbar und/ oder mit dieser verbindbar ist.

In einem zweiten Aspekt der Erfindung wird ein Verfahren zum Vorbereiten einer ECM-Anlage zum Aufnehmen und Bearbeiten wenigstens eines Bauteils vorgeschlagen. Die ECM-Anlage weist dabei eine Positioniereinrichtung zum Positionieren einer Bearbeitungsplattform und eine Aufnahme zum Anordnen einer Spanneinrichtung und wenigstens eines Bauteils auf. Das Verfahren weist folgende Schritte auf:
a) Anordnen einer Einstellvorrichtung an der Positioniereinrichtung;
b) Einstellen der Positioniereinrichtung;
d) Anordnen der Bearbeitungsplattform an der eingerichteten Positioniereinrichtung; und
f) Anordnen der Spanneinrichtung an der Aufnahme.

Die ECM-Anlage entspricht dabei einer vorausgehend beschriebenen ECM-Anlage und weist entsprechend wenigstens ein oder mehrere der vorausgehend beschriebene Merkmale auf. Die Die Einstellvorrichtung kann ein- oder mehrteilig ausgeführt sein und beispielsweise eine erste, zweite und dritte Einstelleinrichtung aufweisen. Bei dem Verfahren wird zunächst eine erste Einstelleinrichtung an der insbesondere zum Positionieren der Bearbeitungsplattform vorgesehenen Positioniereinrichtung angeordnet. Die Elemente der Positioniereinrichtung kontaktieren dabei Einricht- bzw. Anlageflächen der ersten Einstelleinrichtung und werden so an die jeweils vorgesehene räumliche Position bewegt. In dieser Position werden die Elemente der Positioniereinrichtung im Schritt b) fixiert, entsprechend wird die Positioniereinrichtung dabei eingestellt bzw. eingerichtet.

Nach dem Einrichten der Positioniervorrichtung kann im Schritt d) die Bearbeitungsplattform an der eingestellten Positioniereinrichtung angeordnet werden und im Schritt f) die Spanneinrichtung insbesondere mit wenigstens einem daran angeordneten Bauteil an der Aufnahme platziert werden.

Mit dem vorgeschlagenen Verfahren kann eine Bearbeitungsplattform in einfacher Weise präzise an der ECM-Anlage und gegenüber der Aufnahme positioniert werden. Dadurch ist die ECM-Anlage so vorbereitbar, dass an der Aufnahme angeordnete Bauteile definiert gegenüber der Bearbeitungsplattform bewegbar sind.

Bei einer Ausführung des Verfahrens bzw. bei einer entsprechend ausgebildeten ECM-Anlage wird in einem zusätzlichen Schritt c), welcher nach dem Schritt b) durchgeführt wird, die Aufnahme gegenüber der Einstellvorrichtung eingestellt. Hierfür kann an der Einstellvorrichtung wenigstens eine entsprechende Einricht- bzw. Anlagefläche vorgesehen sein, oder es kann eine zweite Einstelleinrichtung vorgesehen sein, welche zum Einrichten der Aufnahme dient. Die zweite Einstelleinrichtung kann dabei integral, mit der ersten Einstelleinrichtung ausgeführt sein, oder an dieser anordenbar und/ oder mit dieser verbindbar ausgeführt sein. Insbesondere eine drehbar ausgeführte Aufnahme kann beim Einrichten gegenüber der Positioniervorrichtung zentriert werden.

Bei einer weiteren möglichen Ausführungsform des Verfahrens zum Vorbereiten einer ECM-Anlage wird vor dem Schritt f) der Schritt e1) durchgeführt, bei welchem eine zweite Einstelleinrichtung an der Aufnahme angeordnet wird und ein Schritt e2), bei welchem ein an einer Bearbeitungsstation angeordneter Elektrodenträger oder eine daran angeordnete Elektrode gegenüber der Aufnahme mithilfe einer zweiten Einstelleinrichtung in einer vorgesehenen Position eingestellt wird. Der Schritt e2) kann, gegebenenfalls nach einem erneuten Durchführen des Schritts e1), bei dem eine zweite Einstelleinrichtung insbesondere an einer weiteren Position an der Aufnahme angeordnet wird, insbesondere entsprechend der Anzahl der an der Bearbeitungsplattform angeordneten Bearbeitungsstationen wiederholt ausgeführt werden. Das Voreinstellen von Werkzeugen unabhängig von einem an der Aufnahme angeordneten Bauteil ermöglicht zusätzlich eine Zeitersparnis bei einer Umrüstung auf andere Bauteile.

Ein weiterer Aspekt der Erfindung betrifft eine Anordnung mehrerer ECM-Anlagen zum flexiblen Bearbeiten gleicher und/ oder verschiedener Bauteile. Dabei ist ein an einer Spanneinrichtung angeordnetes Bauteil nach einer Bearbeitung in einer Bearbeitungsplattform einer ersten EMC-Anlage insbesondere zusammen mit der Spanneinrichtung in eine Aufnahme einer zweiten ECM-Anlage anordenbar, an welcher das Bauteil positionsgenau aufnehmbar ist, und insbesondere ohne zusätzliche Positionierung gegenüber der Bearbeitungsplattform der zweiten ECM-Anlage positioniert bearbeitbar ist.

Die ECM-Anlagen der Anordnung mehrerer ECM-Anlagen sind dabei entsprechend mindestens einer Ausführung der vorausgehend beschriebenen ECM-Anlage ausgeführt und mit einem Verfahren zum Vorbereiten einer ECM-Anlage nach einer Ausführung des vorausgehend beschriebenen Verfahrens für ein flexibles Bearbeiten von Bauteilen vorbereitbar.

Durch den Einsatz von insbesondere wechselweise an den ECM-Anlagen anordenbaren Bearbeitungsplattformen ist die Konfiguration einzelner ECM-Anlagen der Anordnung bezüglich der auf den einzelnen ECM-Anlagen vorgesehenen Bearbeitungsschritten flexibel kombinierbar. So ist beispielsweise durch eine flexible Gestaltbarkeit der flexibel an unterschiedlichen ECM-Anlagen einsetzbaren Bearbeitungsplattformen eine Integration von für bestimmte Bearbeitungsschritte erforderlichen Einrichtungen wie Spülkammern oder weiteren zusätzlichen Features über die Auswahl und Gestaltung der Bearbeitungsplattformen einfach möglich und leicht in die vorgeschlagene Anordnung aus ECM-Anlagen integrierbar. Damit stellt die Anordnung aus ECM-Anlagen ein hohes Maß an Fertigungsflexibilität zur Verfügung. Zudem ist es beispielsweise bei Störungen an einer ECM-Anlage vergleichsweise einfach möglich, auf eine andere entsprechend ausgebildete ECM-Anlage 10 auszuweichen.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1a: eine schematische dreidimensionale Darstellung eines Ausschnitts aus einer beispielhaften erfindungsgemäßen ECM-Anlage;
- Fig. 1b: eine schematische Draufsicht auf den in Fig. 1a gezeigten Ausschnitt aus einer beispielhaften erfindungsgemäßen ECM-Anlage;
- Fig. 2: die schematische Draufsicht aus Fig. 1b, wobei eine erste Einstelleinrichtung einer Einstellvorrichtung an der ECM-Anlage angeordnet ist;
- Fig. 3: die schematische Draufsicht aus Fig. 1b, wobei eine erste und eine zweite Einstelleinrichtung der Einstellvorrichtung an der ECM-Anlage angeordnet sind;
- Fig. 4: die schematische Draufsicht aus Fig. 1b, wobei eine Bearbeitungsplattform und eine dritte Einstelleinrichtung der Einstellvorrichtung an der ECM-Anlage angeordnet sind;
- Fig. 5: die schematische Draufsicht aus Fig. 1b, wobei die Bearbeitungsplattform und ein an einer Spanneinrichtung angeordnetes Bauteil an der ECM-Anlage angeordnet sind;
- Fig. 6: eine beispielhafte dreidimensionale Darstellung des Ausschnitts aus einer weiteren beispielhaften erfindungsgemäßen ECM-Anlage; und
- Fig. 7: eine schematische Darstellung eines Ablaufdiagramms des erfindungsgemäßen Verfahrens.

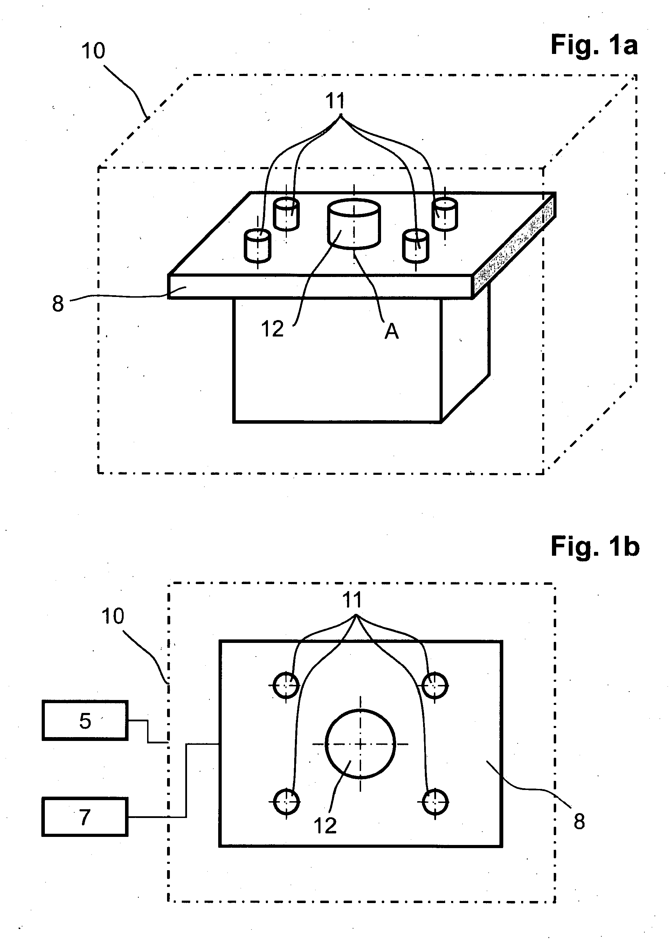

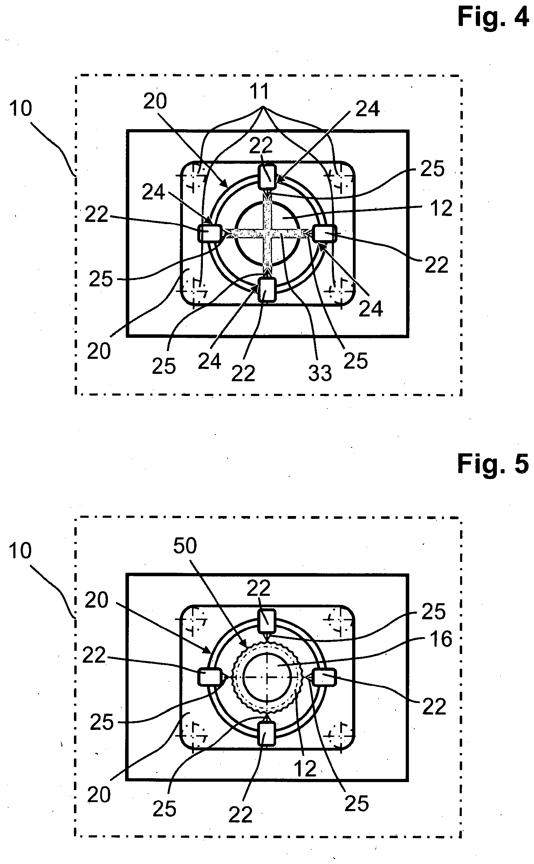

**Fig. 1a** zeigt eine schematische dreidimensionale Darstellung eines Ausschnitts aus einer beispielhaften erfindungsgemäßen ECM-Anlage 10. Die ECM-Anlage 10 weist eine auf einem Maschinentisch 8 angeordnete Aufnahme 12 zum Anordnen wenigstens eines zu bearbeitenden Bauteils 50 (vgl. Fig. 5) und mit wenigstens einer Bearbeitungsstation 22 (vgl. Figs. 4, 5) zum elektrochemischen Bearbeiten des wenigstens einen Bauteils 50 an wenigstens einer Bearbeitungsposition. Die ECM-Anlage 10 weist eine räumlich einrichtbare Positioniereinrichtung 11 auf, gegenüber welcher die räumliche Position der Aufnahme 12 einstellbar ausgebildet sein kann. Die Positioniereinrichtung 11 ist ausgebildet, eine nach dem Einrichten daran angeordnete Bearbeitungsplattform 20 (vgl. Figs. 4, 5) in einer vorbestimmten Position zu lagern, wobei die Bearbeitungsplattform 20 wenigstens eine Bearbeitungsstation 22 mit wenigstens einer daran angeordneten Elektrode 25 (vgl. Figs. 4, 5) aufweist, die entlang einer Bearbeitungsbahn zum Bearbeiten wenigstens eines an der Aufnahme 12 anordenbaren Bauteils 50 verfahrbar ist. Um den Maschinentisch 8 der ECM-Anlage 10 ist eine nicht dargestellte Umhausung vorgesehen, womit die Bearbeitung gekapselt gegengenüber der Umgebung durchführbar ist.

**Fig. 1b** zeigt eine schematische Draufsicht auf den in Fig. 1a gezeigten Ausschnitt der beispielhaften erfindungsgemäßen ECM-Anlage, wobei gleiche Elemente der ECM-Anlage 10 mit gleichen Bezugszeichen versehen sind. Die ECM-Anlage 10 weist entsprechend wenigstens eine vier einstellbare Aufnehmer aufweisende Positioniereinrichtung 11 und eine Aufnahme 12 auf, sowie eine Versorgungseinrichtung 7 mit nicht dargestellten Medienanschlüssen sowie eine Steuerungseinrichtung 5 zum Steuern der ECM-Anlage 10.

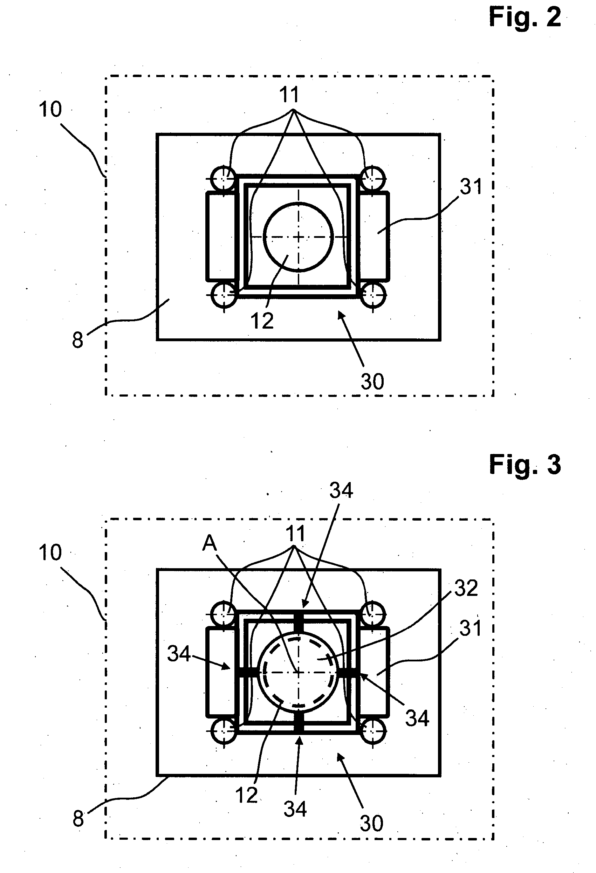

**Fig. 2** zeigt die schematische Draufsicht aus Fig. 1b, wobei eine erste Einstelleinrichtung 31 einer Einstellvorrichtung 30 an der ECM-Anlage 10 angeordnet ist. Die erste Einstelleinrichtung 31 dient zum räumlichen Einrichten der Positioniereinrichtung 11, deren vier in einem Rechteck angeordnete Aufnehmer über Kontaktflächen an der ersten Einstelleinrichtung 31 anliegen. Dadurch werden diese gegenüber der ersten Einstelleinrichtung 31 in eine vorbestimmte Position bewegt bzw. eingerichtet, und dort beispielsweise mittels einem Nullpunktspannsystem fixiert.

**Fig. 3** zeigt die schematische Draufsicht aus Fig. 1b, wobei eine erste Einstelleinrichtung 31 und eine zweite Einstelleinrichtung 32 der Einstellvorrichtung 30 an der ECM-Anlage 10 angeordnet sind. Die erste. Einstelleinrichtung 31 dient hier zur Positionierung der zweiten Einstelleinrichtung 32 gegenüber der bereits eingerichteten und fixierten Positioniereinrichtung 11. Auf diese Weise kann die räumliche Position einer räumlich einstellbaren Aufnahme 12 gegenüber der Positioniereinrichtung 11 eingerichtet werden. Eine solche zweite Einstelleinrichtung 32 kann hierzu über Passflächen 34 an der ersten Einstelleinrichtung 31 präzise gelagert werden, so dass bei einer Ausführung der ECM-Anlage mit einer in geeigneter Weise räumlich bewegbar an der ECM-Anlage 10 angeordneten Aufnahme 12 diese gegenüber der Einstellvorrichtung 30 exakt einstellbar ist. Im Beispiel der Fig. 3 wird die Aufnahme 12 in der eingerichteten Position an der ECM-Anlage 10 positioniert, beispielsweise mittels eines geeignet ausgebildeten Nullpunktspannsystems. Insbesondere werden bei der schematisch gezeigten beispielhaften Ausführung alle einzurichtenden Elemente der ECM-Anlage 10 zur Rotationachse A hin eingestellt, wodurch eine flexible Anordnung der insbesondere wechselbaren Elemente der ECM-Anlage 10 möglich ist. So kann beispielsweise bei einer Störung vergleichsweise einfach auf eine andere entsprechend ausgebildete ECM-Anlage 10 ausgewichen werden.

**Fig. 4** zeigt die schematische Draufsicht aus Fig. 1b, wobei eine Bearbeitungsplattform 20 und eine dritte Einstelleinrichtung 33 der Einstellvorrichtung 30 an der ECM-Anlage 10 angeordnet sind. Die Bearbeitungsplattform 20 weist vier Bearbeitungsstationen 22 auf, an welchen Elektroden 25 an Elektrodenträgern 24 angeordnet sind. Die dritte Einstelleinrichtung 33 ist über Passflächen an der Aufnahme 12 positioniert und dient zum räumlichen Positionieren und damit zum Einrichten der Elektroden 25 bzw. der Elektrodenträger 24 gegenüber der Aufnahme 12.

**Fig. 5** zeigt die schematische Draufsicht aus Fig. 1b, wobei die Bearbeitungsplattform 20 und ein an einer Spanneinrichtung 16 angeordnetes Bauteil 50 an der ECM-Anlage 10 angeordnet sind. Das insbesondere von oben zuführ- und wieder nach oben entnehmbare Bauteil 50 ist, positioniert an der Aufnahme 12 angeordnet, so dass es durch eine vorbestimmte Bewegung der Aufnahme 12 präzise von einer Bearbeitungs- in eine andere Bearbeitungsposition bewegbar ist. Die Bearbeitung erfolgt beispielsweise durch einen Precise Electro Chemical Machining-Prozess (PECM-Prozess), wobei zum Herstellen der Bearbeitung am Umfang des Bauteils 50 gleichzeitig mehrere Ausnehmungen elektrochemisch abgesenkt werden.

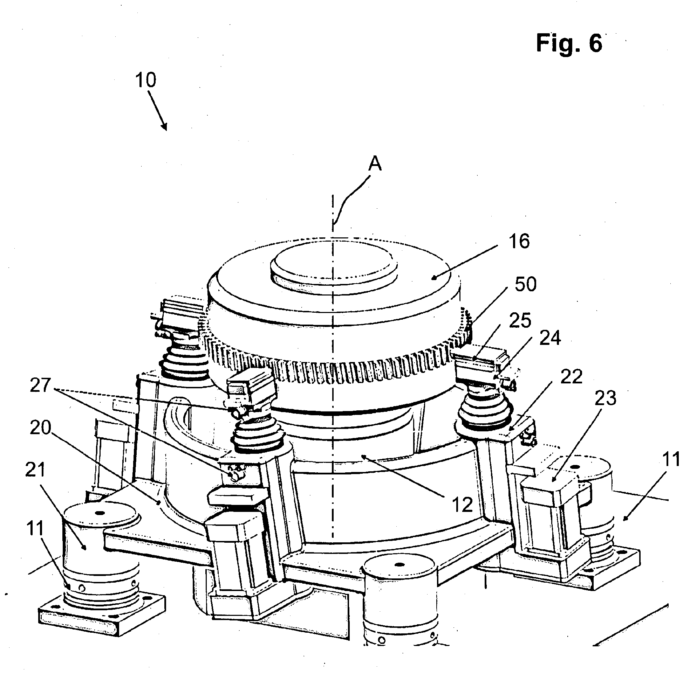

**Fig. 6** zeigt eine beispielhafte dreidimensionale Darstellung des Ausschnitts aus einer beispielhaften erfindungsgemäßen ECM-Anlage aus Fig. 5. Die ECM-Anlage 10 weist eine Aufnahme 12 zum Anordnen wenigstens eines zu bearbeitenden Bauteils 50 und eine Bearbeitungsplattform 20 mit vier Bearbeitungsstationen 22 zum elektrochemischen Bearbeiten des Bauteils 50 an wenigstens einer Bearbeitungsposition auf. Die Bearbeitungsstationen 22 der beispielhaften Bearbeitungsplattform 20 weisen eine Antriebseinrichtung 23 zum Antreiben der Elektrode 25 bzw. des Elektrodenträgers 24 auf einer fest vorgegebenen Bewegungsbahn auf. Die vorgegebene Bewegungsbahn entspricht bei dem Ausführungsbeispiel jeweils der Bewegungsachse der Antriebseinrichtung 23 jeweiligen Bearbeitungsstation 22. So ist ein Bearbeiten des Bauteils 50 zeitlich parallel und örtlich voneinander beabstandet an bis zu vier Positionen durchführbar. Das Bauteil 50 der dargestellten beispielhaften Ausführungsform ist rotationssymmetrisch ausgebildet und wird an seinem Umfang bearbeitet, wobei die Bearbeitungsbahn hier insbesondere einer Geraden entspricht, welche geneigt zur Rotationsachse des Bauteils angeordnet ist.

Die ECM-Anlage 10 weist ferner eine räumlich einrichtbare Positioniereinrichtung 11 auf, an welcher die Bearbeitungsplattform 20 nach dem Einrichten der Positioniereinrichtung 11 an Verbindungsaufnahmen 21 der Bearbeitungsplattform 20 in einer vorbestimmten Position positioniert lagerbar ist. Die Positioniereinrichtung 11 ist dabei so ausgeführt, dass mehrere Bearbeitungsplattformen 20 wechselweise daran anordenbar sind. Die Positioniereinrichtung 11 weist zum Positionieren der Bearbeitungsplattform beispielsweise ein Nullpunktspannsystem auf. Die räumliche Position der Aufnahme 12 kann gegenüber der Positioniereinrichtung 11 räumlich einstellbar ausgebildet sein, wobei auch die Aufnahme 12 zum Vereinfachen ihres Einrichtens ein Nullpunktspannsystem aufweisen kann. Die Bearbeitungsstationen 22 weisen bei der beispielhaften Ausführungsform jeweils eine daran angeordnete Elektrode 25 auf, die entlang einer Bearbeitungsbahn zum Bearbeiten des an der Aufnahme 12 angeordneten Bauteils 50 verfahrbar ist. Hierfür ist an jeder Bearbeitungsstation 22 ein positionierbarer Elektrodenträger 24 vorgesehen, an welchem wenigstens eine Elektrode 25 in einer vorbestimmten Position angeordnet ist. Auch die Elektrodenträger 24 können zum Positionieren der Elektroden 25 mit einem Nullpunktspannsystem ausgestattet sein. Das zu bearbeitende Bauteil 25 ist in einer vordefinierten Position an einer Spanneinrichtung 16 angeordnet und das Bauteil 50 ist zusammen mit der Spanneinrichtung 16 in einer vordefinierten Position an der Aufnahme 12 angeordnet.

Die Aufnahme 16 der beispielhaften Ausführung ist definiert um die Rotationsachse A bewegbar ausgeführt, um das daran angeordnete Bauteil 50 in eine Bearbeitungsposition zu bewegen. An der Bearbeitungsplattform 20 sind ferner Versorgungsanschlüsse 27 für Energie und/ oder Medien wie insbesondere Elektrolyt, Druckluft und/ oder Hydraulikflüssigkeit angeordnet. Die Elektrolytführung erfolgt dabei beispielsweise integral durch die Elektrode 25 oder im Gegenstromverfahren bzw. mittels einer an der Bearbeitungsplattform 20 angeordneten und angesteuerten Druckkammer (passive oder aktive Spülkammer). Bei der beispielhaften Ausführung wird insbesondere mittels einer Steuereinrichtung jede Bearbeitungsstation 22 eigenständig betrieben, insbesondere bezüglich des Vorschubs, der Spannung, der Elektrolytzufuhr. So ist auch eine Kombination aus individuellen Vorschub unter Verwendung gemeinsamer ECM-Parameter grundsätzlich möglich. So kann beispielsweise die zulässige Strombelastung am Bauteil 50 durch die Wahl der Bearbeitungsparameter und/ oder durch die Anzahl der im Eingriff befindlichen Elektroden 25 bestimmt werden, wodurch Störungen der diese verursachenden Bearbeitungsstation 22 zugewiesen werden können.

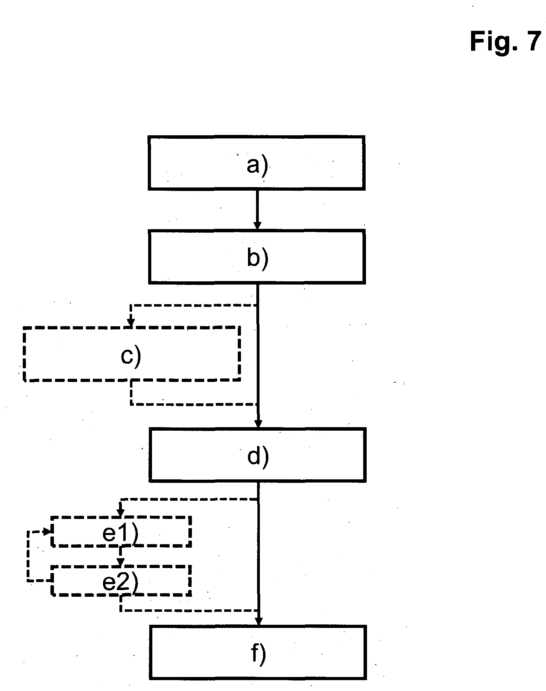

Fig. 7 zeigt eine schematische Darstellung eines Ablaufdiagramms des erfindungsgemäßen Verfahrens zum Vorbereiten der ECM-Anlage 10 zum Aufnehmen und Bearbeiten wenigstens eines Bauteils 50. Die ECM-Anlage 10 weist dabei eine Positioniervorrichtung 11 zum Positionieren einer Bearbeitungsplattform 20 und eine Aufnahme 12 zum Anordnen einer Spanneinrichtung 16 mit wenigstens einem Bauteil 50 auf.

Das erfindungsgemäße Verfahren weist die folgenden Schritte auf: In einem ersten Schritt a) wird eine Einstellvorrichtung 30 an der Positioniereinrichtung 11 angeordnet. Im zweiten Schritt b) erfolgt dann ein Einstellen der Positioniereinrichtung 11. In einem optionalen dritten Schritt c) kann abhängig von der Ausführung der ECM-Anlage die Aufnahme 12 gegenüber der Einstellvorrichtung 30 eingestellt werden. Hierzu kann beispielsweise eine zweite Einstelleinrichtung 32 verwendet werden. Im vierten Schritt d) wird die Bearbeitungsplattform 20 an der eingestellten Positioniereinrichtung 11 angeordnet und in einem fünften Schritt f) die Spanneinrichtung 16 an der Aufnahme 12 angeordnet.

Optional werden bei dem Verfahren vor dem fünften Schritt f) die Schritte e1) und e2) durchgeführt, wobei im Schritt e1) eine zweite Einstelleinrichtung 32 an der Aufnahme 12 angeordnet wird und im Schritt e2) mithilfe der zweiten Einstelleinrichtung 32 ein an einer Bearbeitungsstation 22 angeordneter Elektrodenträger 24 oder eine daran angeordnete Elektrode 25 gegenüber der Aufnahme 12 eingestellt wird. Der Schritt e2), kann dabei gegebenenfalls nach einem erneuten Durchführen des Schritts e1) insbesondere entsprechend der Anzahl der an der Bearbeitungsplattform 20 angeordneten Bearbeitungsstationen 22 wiederholt ausgeführt werden.

### BEZUGSZEICHENLISTE

- 5: Steuerungseinrichtung
- 7: Versorgungseinrichtung
- 8: Maschinentisch
- 10: ECM-Anlage
- 11: Positioniereinrichtung
- 12: Aufnahme
- 16: Spanneinrichtung
- 20: Bearbeitungsplattform
- 21: Verbindungsaufnahmen der Bearbeitungsplattform
- 22: Bearbeitungsstation
- 23: Antriebseinrichtung
- 24: Elektrodenträger
- 25: Elektrode
- 27: Versorgungsanschluss
- 30: Einstellvorrichtung
- 31: erste Einstelleinrichtung
- 32: zweite Einstelleinrichtung
- 33: dritte Einstelleinrichtung
- 34: Passfläche
- 50: Bauteil

- A: Rotationsachse

## Patentansprüche

1. ECM-Anlage mit einer Aufnahme (12) zum Anordnen wenigstens eines zu bearbeitenden Bauteils (50) und mit wenigstens einer Bearbeitungsstation (22) zum elektrochemischen Bearbeiten des wenigstens einen Bauteils (50) an wenigstens einer Bearbeitungsposition, wobei eine Bearbeitungsplattform (20) vorgesehen ist, die wenigstens eine Bearbeitungsstation (22) mit wenigstens einer daran angeordneten Elektrode (25) aufweist, die entlang einer Bearbeitungsbahn zum Bearbeiten des wenigstens einen an der Aufnahme (12) anordnenbaren Bauteils (50) verfahrbar ist,
**dadurch gekennzeichnet,**
**dass** die ECM-Anlage (10) eine räumlich einrichtbare Positioniereinrichtung (11) aufweist, welche ausgebildet ist, nach dem Einrichten der Positioniereinrichtung (11) die daran angeordnete Bearbeitungsplattform (20) in einer vorbestimmten Position zu lagern.

2. ECM-Anlage nach Anspruch 1, **dadurch gekennzeichnet, dass** die räumliche Position der Aufnahme (12) gegenüber der Positioniereinrichtung (11) einstellbar ist.

3. ECM-Anlage nach wenigstens einem der vorhergehenden Ansprüche, **dadurch gekennzeichnet, dass** mehrere Bearbeitungsplattformen (20) wechselweise an der Positioniereinrichtung (11) anordenbar sind.

4. ECM-Anlage nach wenigstens einem der vorhergehenden Ansprüche, **gekennzeichnet durch** eine Spanneinrichtung (16) für wenigstens ein zu bearbeitendes Bauteil (50), an welcher das wenigstens eine Bauteil (50) in einer vordefinierten Position anordenbar ist und welche zusammen mit dem wenigstens einen Bauteil (50) in einer vordefinierten Position an der Aufnahme (12) anordenbar ist.

5. ECM-Anlage nach wenigstens einem der vorhergehenden Ansprüche, **dadurch gekennzeichnet, dass** an der wenigstens einen Bearbeitungsstation (22) ein positionierbarer Elektrodenträger (24) angeordnet ist, an welchem wenigstens eine Elektrode (25) in einer vorbestimmten Position anordenbar ist.

6. ECM-Anlage nach wenigstens einem der vorhergehenden Ansprüche, **dadurch gekennzeichnet, dass** die Aufnahme definiert um eine Rotationsachse (A) und/ oder entlang wenigstens einer Bewegungsbahn bewegbar ist, um wenigstens ein daran angeordnetes Bauteil (50) insbesondere in eine Bearbeitungsposition zu bewegen.

7. ECM-Anlage nach wenigstens einem der vorhergehenden Ansprüche **dadurch gekennzeichnet, dass** die Positioniereinrichtung (11) zum Positionieren der Bearbeitungsplattform (20) und/ oder die Aufnahme (12) und/ oder der Elektrodenträger (24) der Bearbeitungsstation (22) ein Nullpunktspannsystem aufweist.

8. ECM-Anlage nach wenigstens einem der vorhergehenden Ansprüche **dadurch gekennzeichnet, dass** an der Bearbeitungsplattform (20) Versorgungsanschlüsse (27) für Energie und/ oder Medien wie insbesondere Elektrolyt, Druckluft und/ oder Hydraulikflüssigkeit angeordnet sind.

9. ECM-Anlage nach wenigstens einem der vorhergehenden Ansprüche, **dadurch gekennzeichnet, dass** an der Bearbeitungsplattform (20) mehrere parallel betreibbare Bearbeitungsstationen (22) angeordnet sind, so dass ein Bearbeiten zeitlich parallel und örtlich voneinander beabstandet an mehreren am Bauteil (50) angeordneten Positionen durchführbar ist.

10. ECM-Anlage nach wenigstens einem der vorhergehenden Ansprüche, **dadurch gekennzeichnet, dass** die wenigstens eine an der Bearbeitungsplattform (20) angeordnete Bearbeitungsstation (22) eine Antriebseinrichtung (23) zum Antreiben der Elektrode (25) bzw. des Elektrodenträgers (24) auf einer fest vorgegebenen Bewegungsbahn aufweist.

11. ECM-Anlage nach wenigstens einem der vorhergehenden Ansprüche, **gekennzeichnet durch** eine Einstellvorrichtung (30), aufweisend eine an der Positioniereinrichtung (11) anordenbare erste Einstelleinrichtung (31) zum Einrichten der Position der. Positioniereinrichtung (11), vorzugsweise zusätzlich aufweisend eine an der ersten Einstelleinrichtung (31) anordenbare zweite Einstelleinrichtung (32) zum Einrichten der Position der Aufnahme (12), wobei die Einstellvorrichtung (30) weiter bevorzugt eine an der Aufnahme (12) anordenbare dritte Einstelleinrichtung (33) zum Einrichten der Position des wenigstens einen Elektrodenträgers (24) und/ oder zum Einrichten der Position der wenigstens einen Elektrode (25) aufweist.

12. Verfahren zum Vorbereiten der ECM-Anlage (10) nach wenigstens einem der vorhergehenden Ansprüche zum Aufnehmen und Bearbeiten wenigstens eines Bauteils (50), wobei die ECM-Anlage (10) eine Positioniervorrichtung (11) zum Positionieren einer Bearbeitungsplattform (20) und eine Aufnahme (12) zum Anordnen einer Spanneinrichtung (16) und wenigstens einem Bauteil aufweist, **gekennzeichnet durch** die folgenden Schritte:
a) Anordnen einer Einstellvorrichtung (30) an der Positioniereinrichtung (11);
b) Einstellen der Positioniereinrichtung (11);
d) Anordnen der Bearbeitungsplattform (20) an der eingestellten Positioniereinrichtung (11); und
f) Anordnen der Spanneinrichtung (16) an der Aufnahme (12).

13. Verfahren zum Vorbereiten einer ECM-Anlage nach Anspruch 12, **dadurch**
**gekennzeichnet, dass** vor dem Schritt d) der folgende Schritt durchgeführt wird:
c) Einstellen der Aufnahme (12) gegenüber der Einstellvorrichtung (11).

14. Verfahren zum Vorbereiten einer ECM-Anlage nach einem der Ansprüche 12 oder 13, **dadurch gekennzeichnet, dass** vor dem Schritt f) die folgenden Schritte durchgeführt werden:
e1) Anordnen einer dritten Einstelleinrichtung (33) an der Aufnahme (12); und
e2) Einstellen eines an einer Bearbeitungsstation (22) angeordneten Elektrodenträgers (24) oder einer daran angeordneten Elektrode (25) gegenüber der Aufnahme (12) mithilfe der dritten Einstelleinrichtung (33),
wobei der Schritt e2), gegebenenfalls nach einem erneuten Durchführen des Schritts e1) insbesondere entsprechend der Anzahl der an der Bearbeitungsplattform (20) angeordneten Bearbeitungsstationen (20) wiederholt ausgeführt wird.

15. Anordnung mehrerer ECM-Anlagen gemäß wenigstens einem der Ansprüche 1 bis 11 zum flexiblen Bearbeiten gleicher und/ oder verschiedener Bauteile (50), **dadurch gekennzeichnet, dass** ein an einer Spanneinrichtung (16) angeordnetes Bauteil (50) nach einer Bearbeitung in einer Bearbeitungsplattform (20) einer ersten EMC-Anlage (10) insbesondere zusammen mit der Spanneinrichtung (16) an einer Aufnahme (12) einer zweiten ECM-Anlage (10) anordenbar ist, an welcher das Bauteil (50) positionsgenau aufnehmbar ist, und insbesondere ohne zusätzliche Positionierung gegenüber der Bearbeitungsplattform (20) der zweiten ECM-Anlage (10) positioniert bearbeitbar ist.

## Claims

1. ECM system having a holder (12) for arranging at least one component (50) to be machined and having at least one machining station (22) for electrochemically machining the at least one component (50) at at least one machining position, a machining platform (20) being provided, which has at least one machining station (22) having at least one electrode (25) arranged thereon, which can be moved along a machining path for machining the at least one component (50) which can be arranged on the holder (12),
**Characterized in that**
the ECM system (10) has a positioning device (11) that can be spatially set and is designed to store the machining platform (20) arranged thereon in a predetermined position after the positioning device (11) has been set.

2. ECM system according to claim 1, **characterized in that** the spatial position of the holder (12) relative to the positioning device (11) is adjustable.

3. ECM system according to at least one of the preceding claims, **characterized in that** a plurality of machining platforms (20) can be arranged alternately on the positioning device (11).

4. ECM system according to at least one of the preceding claims, **characterized by** a clamping device (16) for at least one component (50) to be machined, on which device the at least one component (50) can be arranged in a predefined position and which can be arranged together with the at least one component (50) in a predefined position on the holder (12).

5. ECM system according to at least one of the preceding claims, **characterized in that** a positionable electrode carrier (24) is arranged on the at least one machining station (22), on which carrier at least one electrode (25) can be arranged in a predetermined position.

6. ECM system according to at least one of the preceding claims, **characterized in that** the holder can be moved in a defined manner about an axis of rotation (A) and/or along at least one movement path in order to move at least one component (50) arranged thereon, in particular into a machining position.

7. ECM system according to at least one of the preceding claims, **characterized in that** the positioning device (11) for positioning the machining platform (20) and/or the holder (12) and/or the electrode carrier (24) of the machining station (22) has a zero-point clamping system.

8. ECM system according to at least one of the preceding claims, **characterized in that** supply connections (27) for energy and/or media such as, in particular, electrolyte, compressed air and/or hydraulic fluid are arranged on the machining platform (20).

9. ECM system according to at least one of the preceding claims, **characterized in that** a plurality of machining stations (22) which can be operated in parallel are arranged on the machining platform (20), so that machining can be carried out parallel in time and at a distance from one another at a plurality of positions arranged on the component (50).

10. ECM system according to at least one of the preceding claims, **characterized in that** the at least one machining station (22) arranged on the machining platform (20) has a drive device (23) for driving the electrode (25) or the electrode carrier (24) along a fixedly predetermined movement path.

11. ECM system according to at least one of the preceding claims, **characterized by** an adjusting apparatus (30), having a first adjusting device (31), which can be arranged on the positioning device (11), for setting the position of the positioning device (11), preferably additionally having a second adjusting device (32), which can be arranged on the first adjusting device (31), for setting the position of the holder (12), the adjusting apparatus (30) further preferably having a third adjusting device (33), which can be arranged on the holder (12), for setting the position of the at least one electrode carrier (24) and/or for setting the position of the at least one electrode (25).

12. Method for preparing the ECM system (10) according to at least one of the preceding claims for holding and machining at least one component (50), the ECM system (10) having a positioning apparatus (11) for positioning a machining platform (20) and a holder (12) for arranging a clamping device (16) and at least one component, **characterized by** the following steps:
a) arranging an adjusting apparatus (30) on the positioning device (11);
b) adjusting the positioning device (11);
d) positioning the machining platform (20) on the adjusted positioning device (11); and
f) arranging the clamping device (16) on the holder (12).

13. Method for preparing an ECM system according to claim 12,
**characterized in that** the following step is carried out before step d):
c) adjusting the holder (12) relative to the adjusting apparatus (11).

14. Method for preparing an ECM system according to any of claims 12 or 13, **characterized in that** the following steps are carried out before step f):
e1) arranging a third adjusting device (33) on the holder (12); and
e2) adjusting an electrode carrier (24) arranged on a machining station (22) or an electrode (25) arranged thereon relative to the holder (12) using the third adjusting device (33),
step e2) being carried out repeatedly, if necessary after step e1) has been carried out again, in particular according to the number of machining stations (20) arranged on the machining platform (20).

15. Arrangement of a plurality of ECM systems according to at least one of claims 1 to 11 for the flexible machining of identical and/or different components (50), **characterized in that** a component (50) arranged on a clamping device (16) can be arranged, after machining in a machining platform (20) of a first ECM system (10), in particular together with the clamping device (16), on a holder (12) of a second ECM system (10), in which the component (50) can be held in a precise position and, in particular, can be machined as positioned without additional positioning relative to the machining platform (20) of the second ECM system (10).

## Revendications

1. Installation d'ECM comportant un logement (12) destiné à la disposition d'au moins un composant (50) à usiner et comportant au moins un poste d'usinage (22) destiné à l'usinage de manière électrochimique de l'au moins un composant (50) dans au moins une position d'usinage, une plate-forme d'usinage (20) étant prévue, laquelle présente au moins un poste d'usinage (22) comportant au moins une électrode (25) disposée au niveau de celui-ci, laquelle électrode peut être déplacée le long d'une trajectoire d'usinage pour l'usinage de l'au moins un composant (50) pouvant être disposé au niveau du logement (12),
**caractérisée en ce**
**que** l'installation d'ECM (10) présente un appareil de positionnement (11) orientable dans l'espace, lequel est conçu pour conserver la plate-forme d'usinage (20) disposée au niveau de celui-ci dans une position prédéterminée après l'orientation de l'appareil de positionnement (11).

2. Installation d'ECM selon la revendication 1, **caractérisée en ce que** la position spatiale du logement (12) est réglable par rapport à l'appareil de positionnement (11).

3. Installation d'ECM selon au moins l'une des revendications précédentes, **caractérisée en ce que** plusieurs plates-formes d'usinage (20) peuvent être disposées en alternance au niveau de l'appareil de positionnement (11).

4. Installation d'ECM selon au moins l'une des revendications précédentes, **caractérisée par** un appareil de serrage (16) pour au moins un composant (50) à usiner, au niveau duquel l'au moins un composant (50) peut être disposé dans une position prédéfinie et lequel peut être disposé conjointement avec l'au moins un composant (50) dans une position prédéfinie au niveau du logement (12).

5. Installation d'ECM selon au moins l'une des revendications précédentes, **caractérisée en ce qu'**au niveau de l'au moins un poste d'usinage (22) est disposé un porte-électrode (24) pouvant être positionné, au niveau duquel au moins une électrode (25) peut être disposée dans une position prédéterminée.

6. Installation d'ECM selon au moins l'une des revendications précédentes, **caractérisée en ce que** le logement est mobile de manière définie autour d'un axe de rotation (A) et/ou le long d'au moins une trajectoire de déplacement, afin de déplacer au moins un composant (50) disposé au niveau dudit logement, en particulier dans une position d'usinage.

7. Installation d'ECM selon au moins l'une des revendications précédentes, **caractérisée en ce que** l'appareil de positionnement (11) présente un système de serrage à point zéro pour le positionnement de la plate-forme d'usinage (20) et/ou du logement (12) et/ou du porte-électrode (24) du poste d'usinage (22).

8. Installation d'ECM selon au moins l'une des revendications précédentes, **caractérisée en ce que** des raccords d'alimentation (27) pour l'énergie et/ou des fluides, comme en particulier l'électrolyte, l'air comprimé et/ou le liquide hydraulique, sont disposés au niveau de la plate-forme d'usinage (20).

9. Installation d'ECM selon au moins l'une des revendications précédentes, **caractérisée en ce que** plusieurs postes d'usinage (22) pouvant fonctionner en parallèle sont disposés au niveau de la plate-forme d'usinage (20), de sorte qu'un usinage peut être réalisé parallèlement dans le temps et de manière distancée les uns des autres en plusieurs positions disposées au niveau du composant (50).

10. Installation d'ECM selon au moins l'une des revendications précédentes, **caractérisée en ce que** l'au moins un poste d'usinage (22) disposé au niveau de la plate-forme d'usinage (20) présente un appareil d'entraînement (23) destiné à entraîner l'électrode (25) ou le porte-électrode (24) sur une trajectoire de déplacement spécifiée de manière fixe.

11. Installation d'ECM selon au moins l'une des revendications précédentes, **caractérisée par** un dispositif de réglage (30), présentant un premier appareil de réglage (31) pouvant être disposé au niveau de l'appareil de positionnement (11) et destiné à orienter la position de l'appareil de positionnement (11), présentant préférablement en outre un deuxième appareil de réglage (32) pouvant être disposé au niveau du premier appareil de réglage (31) et destiné à orienter la position du logement (12), le dispositif de réglage (30) présentant en outre de préférence un troisième appareil de réglage (33) pouvant être disposé au niveau du logement (12) et destiné à orienter la position de l'au moins un porte-électrode (24) et/ou à orienter la position de l'au moins une électrode (25).

12. Procédé pour la préparation de l'installation d'ECM (10) selon au moins l'une des revendications précédentes pour le logement et l'usinage d'au moins un composant (50), l'installation d'ECM (10) présentant un dispositif de positionnement (11) destiné à positionner une plate-forme d'usinage (20) et un logement (12) destiné à la disposition d'un appareil de serrage (16) et d'au moins un composant, **caractérisé par** les étapes suivantes :
a) disposition d'un dispositif de réglage (30) au niveau de l'appareil de positionnement (11) ;
b) réglage de l'appareil de positionnement (11) ;
d) disposition de la plate-forme d'usinage (20) au niveau de l'appareil de positionnement (11) réglé ; et
f) disposition de l'appareil de serrage (16) au niveau du logement (12).

13. Procédé pour la préparation d'une installation d'ECM selon la revendication 12, **caractérisé en ce que,** avant l'étape d), l'étape suivante est réalisée :
c) réglage du logement (12) par rapport au dispositif de réglage (11).

14. Procédé pour la préparation d'une installation d'ECM selon l'une des revendications 12 ou 13, **caractérisé en ce que,** avant l'étape f), les étapes suivantes sont réalisées :
e1) disposition d'un troisième appareil de réglage (33) au niveau du logement (12) ; et
e2) réglage d'un porte-électrode (24) disposé au niveau d'un poste d'usinage (22) ou d'une électrode (25) disposée au niveau dudit porte-électrode par rapport au logement (12) à l'aide du troisième appareil de réglage (33),
l'étape e2) étant exécutée de manière répétée, éventuellement après une nouvelle réalisation de l'étape e1), en particulier en fonction du nombre de postes d'usinage (20) disposés au niveau de la plate-forme d'usinage (20).

15. Disposition de plusieurs installations d'ECM selon au moins l'une des revendications 1 à 11 pour l'usinage flexible de composants (50) identiques et/ou différents, **caractérisée en ce qu'**un composant (50) disposé au niveau d'un appareil de serrage (16) peut être disposé, après un usinage dans une plate-forme d'usinage (20) d'une première installation d'ECM (10), en particulier conjointement avec l'appareil de serrage (16), au niveau d'un logement (12) d'une seconde installation d'ECM (10), au niveau de laquelle le composant (50) peut être logé dans une position précise et peut en particulier être usiné de manière positionnée, sans positionnement supplémentaire par rapport à la plate-forme d'usinage (20) de la seconde installation d'ECM (10).
